# EUROPÄISCHE PATENTANMELDUNG

(11) **EP 2 420 727 A2**
(43) Veröffentlichungstag der Anmeldung: **22.02.2012**
(21) Anmeldenummer: 11003025.1
(22) Anmeldetag: 11.04.2011
(51) Int. Cl.: F21V 5/00, F21V 5/04, F21V 7/00

(54) **Leuchte**

(30) Priorität: 09.04.2010 DE 102010014520
(71) Anmelder: Bartenbach Holding GmbH, 6071 Aldrans (AT)
(72) Erfinder: Bartenbach, Christian, 6071 Aldrans (AT)
(74) Vertreter: Thoma, Michael

(57) **Zusammenfassung**

Die vorliegende Erfindung betrifft eine Leuchte, vorzugsweise eine Wand- und/oder Deckenleuchte, mit zumindest einer vorzugsweise punktförmigen Lichtquelle, vorzugsweise in Form einer LED, und zumindest einem Optiksystem zur Steuerung der Lichtausbreitung. Die Erfindung betrifft weiters ein Verfahren zur Herstellung einer solchen Leuchte. Erfindungsgemäß besitzt das Optiksystem zur Steuerung der Lichtausbreitung mehrere ineinander angeordnete, jeweils zumindest teilweise transparente Korpusteile, die von dem Licht der Lichtquelle nacheinander durchstrahlbar sind, wobei zumindest ein Innenteil und zumindest ein Außenteil vorgesehen ist, welches sowohl das genannte Innenteil als auch die Lichtquelle und den Bereich, in den die Lichtquelle emittiert, umschließt. Das besagte Außenteil ist hierbei insbesondere dazu vorgesehen, im ausgeschalteten Zustand der Lichtquelle das äußere Erscheinungsbild der Leuchte zu prägen. Das Innenteil des Optiksystems ist indes vorgesehen, beispielsweise durch Bündelung, Streuung oder Reflexion des abgegebenen Lichts das Erscheinungsbild der Leuchte im eingeschalteten Zustand zu prägen.

## Beschreibung

Die vorliegende Erfindung betrifft eine Leuchte, vorzugsweise eine Wand- und/oder Deckenleuchte, mit zumindest einer vorzugsweise punktförmigen Lichtquelle, vorzugsweise in Form einer LED, und zumindest einem Optiksystem zur Steuerung der Lichtausbreitung. Die Erfindung betrifft weiters ein Verfahren zur Herstellung einer solchen Leuchte.

Wand-, Decken-, Dekorations- und Stehleuchten mit LEDs als Lichtquellen sind aus dem Stand der Technik bekannt und können ein etwa trichterförmiges oder glockenförmiges Optiksystem besitzen. LED-Leuchten sind gegenüber klassischen Leuchten, beispielsweise Glühlampen, in einigen Aspekten von Vorteil, so z.B. energiesparender, langlebiger und auch flexibler in der Ausgestaltung ihres Lichttones. LED-Lampen können zudem sehr klein ausgeführt sein und brauchen im Gegensatz zu Entladungslampen keine hohe Zündspannung oder Aufwärmzeit. Ihre Betriebstemperatur ist deutlich geringer als diejenige von klassischen Glühlampen.

Es besteht jedoch auch Interesse, für bestimmte Anwendungen die über klassische Glühbirnen bekannte Birnenform der Leuchten zu erhalten. Für viele Designanordnungen, man denke nur an Kronleuchter, sind die Form und Ausstrahlung einer klassischen Glühbirne nicht wegzudenken und nicht durch kleine LED-Spots zu ersetzen. LED-Leuchten sollen bisweilen äußerlich zumindest im ausgeschalteten Zustand die Optik von herkömmlichen Glühbirnen wiedergeben und im eingeschalteten Zustand ein flexibles Erscheinungsbild haben.

Der vorliegenden Erfindung liegt die Aufgabe zugrunde, eine verbesserte Leuchte der eingangs genannten Art sowie ein verbessertes Herstellverfahren für eine solche Leuchte zu schaffen, die Nachteile des Standes der Technik vermeiden und Letzteren in vorteilhafter Weise weiterbilden. Hierbei soll vorzugsweise eine Leuchte geschaffen werden, welche eine LED oder eine andere punktförmige Lichtquelle besitzt und im ausgeschalteten Zustand ein anderes Erscheinungsbild als im eingeschalteten Zustand haben kann. Eine Zielsetzung beinhaltet hierbei, dass die Leuchte im ausgeschalteten Zustand als großflächiger, solider Körper, vorzugsweise als Kugel wirkt und es kaum auffällt, dass es sich um eine LED-Leuchte an Stelle einer klassischen Glühbirne handelt. Eine weitere Zielsetzung ist, dass im eingeschalteten Zustand ein Innenkorpus zum Vorschein tritt und die Leuchte wie eine trichter- oder spotförmige LED-Leuchte oder auch wie eine klassische Glühbirne oder Halogenlampe erscheint.

Eines oder mehrere der oben genannten Ziele werden erfindungsgemäß mit einer Leuchte gemäß Anspruch 1 sowie ein Verfahren gemäß Anspruch 14 erreicht. Bevorzugte Ausgestaltungen sind Gegenstand der abhängigen Ansprüche.

Es wird also vorgeschlagen, das Optiksystem mehrschalig aufzubauen, so dass das von der punktförmigen Lichtquelle abgegebene Licht verschiedene, zumindest teilweise transparent ausgebildete Teile des Optiksystems nacheinander durchdringt, so dass je nach Ausbildung der verschiedenen Teile des Optiksystems die Wahrnehmung des äußeren Erscheinungsbildes der Leuchte mehr oder minder stark zwischen dem ausgeschalteten und eingeschalteten Zustand variieren kann. Erfindungsgemäß besitzt das Optiksystem zur Steuerung der Lichtausbreitung mehrere ineinander angeordnete, jeweils zumindest teilweise transparente Korpusteile, die von dem Licht der Lichtquelle nacheinander durchstrahlbar sind, wobei zumindest ein Innenteil und zumindest ein Außenteil vorgesehen ist, welches sowohl das genannte Innenteil als auch die Lichtquelle und den Bereich, in den die Lichtquelle emittiert, umschließt. Das besagte Außenteil ist hierbei insbesondere dazu vorgesehen, im ausgeschalteten Zustand der Lichtquelle das äußere Erscheinungsbild der Leuchte zu prägen. Das Innenteil des Optiksystems ist indes vorgesehen, beispielsweise durch Bündelung, Streuung oder Reflexion des abgegebenen Lichts das Erscheinungsbild der Leuchte im eingeschalteten Zustand zu prägen.

Das Außenteil und das Innenteil können hierbei nur einen Teil des Optiksystems bilden und durch weitere optische Elemente wie Reflektoren ergänzt werden, oder bevorzugt auch das gesamte Optiksystem der Leuchte bilden, so dass dieses nur aus dem Innenteil und dem Außenteil besteht. Dabei müssen das Innenteil oder speziell das Außenteil jedoch für sich genommen keine Effekte zeigen, die die Ausbreitungsbahn der Lichtstrahlen beeinflusst.

Der punktförmigen Lichtquelle, insbesondere LED, ist hierbei üblicherweise unmittelbar eine Auskoppellinse zugeordnet, der dann wiederum das vorgenannte Optiksystem umfassend Innenteil und Außenteil nachgeordnet ist. Die genannte Auskoppellinse kann hierbei grundsätzlich verschieden ausgebildet sein und zusammen mit dem Emitter und dem Ansteuerungschip der LED ein an sich bekanntes LED-Paket bilden. Die genannte Auskoppellinse kann beispielsweise eine domförmige Abdeckhaube in Form einer Linse bilden, oder auch in Form einer aus Vollmaterial bestehenden Silikonlinse ausgebildet sein. Die genannte Auskoppellinse muss dabei allerdings nicht zwangsweise domförmig oder kuppelförmig sein, sondern kann auch andere Konturierungen besitzen, beispielsweise in Form eines näherungsweise plattenförmigen Vergussteils ausgebildet sein, der den Emitter und Chip der LED überdeckt.

Das erfindungsgemäße Optiksystem umfassend den vorgenannten Innenteil und Außenteil kann in Weiterbildung der Erfindung von der genannten Auskoppellinse der Lichtquelle beabstandet angeordnet sein, so dass zwischen Auskoppellinse und Innenteil und/oder Außenteil ein Luftspalt vorgesehen ist. Alternativ kann auch eine unmittelbare Anbindung des Optiksystems an die genannte Auskoppellinse erfolgen, beispielsweise durch ein Licht einkoppelndes Gel oder dergleichen.

Die Außenschale ist zumindest teilweise transparent, so dass Licht aus dem von ihr umschlossenen Bereich an die Umgebung treten kann. Das Außenteil kann hierbei kugelförmig sein, um der Leuchte in einer Ausführungsform zumindest im ausgeschalteten Zustand eine kugelförmige Außengestalt (LED-Kugel) zu verleihen. Es sind aber auch Ausführungsformen angedacht, bei denen die Außenschale verschiedene andere Formen annimmt, welche man beispielsweise aus herkömmlichen Glühbirnen kennt. Diese umfassen längliche, ellipsoide Formen, unregelmäßige, rundliche Tropfenformen, zugespitzte Ellipsoide, regelmäßige Ellipsoide, sowie andere regelmäßige und unregelmäßige runde oder kantige Körper. Diese Außenfläche kann der Leuchte zumindest im ausgeschalteten Zustand, aber auch im eingeschalteten Zustand ganz oder hauptsächlich ihr Erschienungsbild verleihen.

In einer Ausführungsform ist die Außenschale hierbei so ausgebildet, dass es im ausgeschalteten Zustand von außen nicht ersichtlich ist, was sich im Inneren der Schale befindet. Dies kann beispielsweise durch Bedampfung an der Innen-und/oder an der Außenseite des Außenteils oder durch eine Trübung des Materiales des Außenteils reguliert werden. In einer anderen Ausführungsform ist die Außenschale vollkommen oder zumindest teilweise transparent ausgebildet, sodass auch im ausgeschaltenen Zustand das Innere der Leuchte sichtbar wird. Die Außen- und/oder Innenteile der Leuchte können auch farbig ausgebildet sein.

Das zumindest teilweise transparente Außenteil des Optiksystems kann hierbei auch dazu genutzt werden, mehrere Lichtquellen oder zumindest die diesen Lichtquellen zugeordneten Innenteile zusammenzuhalten und/oder in einer vorgegebenen Position relativ zueinander zu positionieren, d.h. das Außenteil kann einen gemeinsamen Halter oder Träger für mehrere Lichtquellen und/oder mehrere Innenteile bilden, die den genannten Lichtquellen zuordenbar sind.

Nach einer vorteilhaften Ausführung kann die Leuchte hierdurch als Lichterkette oder Leuchtenband ausgebildet sein, wobei das gemeinsame Außenteil ein Band bildet, in das mehrere Innenteile ggf. mitsamt Lichtquellen eingesetzt sind, vorzugsweise nach Art einer Kette hintereinander aufgereiht sind. Je nach Anwendungszweck kann es hierbei vorteilhaft sein, das Außenteil aus einem verformbaren, insbesondere elastischen oder flexiblen Material auszubilden, so dass ein biegbares bzw. verformbares Lichtband bzw. Leuchtenband entsteht.

Alternativ oder zusätzlich kann das gemeinsame Außenteil, in das mehrere Innenteile und ggf. die zugehörigen Lichtquellen eingesetzt sind, auch paneelartig ausgebildet sein, so dass die Leuchte als Verkleidungselement für eine Wand oder auch als Belag eines Bodens nach Art eines Teppichs verwendbar ist. Vorteilhafterweise sind hierbei in das gemeinsame Außenteil des Optiksystems die mehreren den Lichtquellen jeweils einzeln oder gruppenweise zugeordneten Innenteile des Optiksystems rasterförmig angeordnet. Alternativ oder zusätzlich können die Innenteile hierbei auch symbolhafte Formen besitzen, beispielsweise Richtungspfeile, Stoppschilder oder Begrenzungslinien bilden, die dem Leuchtenpaneel im eingeschalteten Zustand der Lichtquellen eine entsprechende Symbolfunktion geben. Alternativ oder zusätzlich zu einer symbolhaften Konturierung einzelner Innenteile können auch mehrere Innenteile gemeinsam in Form eines entsprechenden Symbols wie beispielsweise einem Fußabdruck angeordnet werden, um beim Einschalten mehrerer Lichtquellen ein entsprechendes Symbol anzuzeigen.

In einer vorteilhaften Ausführungsform der Erfindung schließt das Außenteil bündig oder flächig an die Außenfläche des Innenteils an. Das Außenteil kann in diesem Zusammenhang vorzugsweise eine hinterschnittene Innenfläche besitzen, die vollflächig mit der Außenseite des Innenteils in Berührung steht. Insbesondere kann eine vollflächige Verbindung vorgesehen sein, die keine optische Brechung mit sich bringt.

Das Innenteil kann eine Lichtaustrittsfläche besitzen, die vorteilhafterweise, eine beispielsweise ballig gewölbte Umfangsfläche sowie eine daran anschließende, Deckfläche umfasst, die sich auf der der Lichtquelle abgewandten Stirnseite des Innenteils befindet und eben oder ballig gewölbt ausgebildet sein kann.

Vorteilhafterweise sitzt das Außenteil flächig auf zumindest 50 %, vorzugsweise mehr als 75 % der Lichtaustrittsfläche des Innenteils. Nach einer vorteilhaften Ausführung der Erfindung kann die Lichtaustrittsfläche des Innenteils vollständig mit dem Außenteil in Flächenkontakt stehen.

In einer weiteren vorteilhaften Ausführungsform ist zwischen dem Innenteil und dem Außenteil eine vorzugsweise teildurchlässige Reflexionsschicht vorgesehen. Diese kann beispielsweise auf die Grenzfläche zwischen Innenteil und Außenteil aufgebracht sein. Dadurch wird bewirkt, dass zumindest ein Teil des auf den Verbindungsbereich zwischen Innen- und Außenteil des Vollmaterialkorpus auftreffenden Lichtes reflektiert wird. Die Lichtausbreitung wird eingeschränkt und eine Ausrichtung der Lichtstrahlen bedingt. Dies ermöglicht bestimmte optische Effekte, die im Zusammenhang mit nachfolgenden Ausführungsformen näher erläutert werden und insbesondere ein Hervortreten des Innenteils durch das dieses schalenförmig umschließende Außenteil bei eingeschalteter Lichtquelle einschließen können.

Nach einer besonders vorteilhaften Ausführung der Erfindung kann hierbei auf dem Innenteil des Optiksystems eine vorzugsweise teildurchlässige Reflexionsschicht aufgebracht sein, vorteilhafterweise durch Bedampfung auf zumindest einem Teil der Lichtaustrittsfläche des Innenteils aufgebracht sein. Dies ist insbesondere dann von Vorteil, wenn die Außenschicht, wie später noch näher erläutert wird, durch Umgießen des Außenteils ausgebildet wird.

Die genannte Reflexionsschicht kann hierbei verschiedene Ausbildungen besitzen und höchst variabel gestaltet werden. Nach einer vorteilhaften Ausführung der Erfindung kann die Reflexionsschicht inhomogen über die Lichtaustrittsfläche des Innenteils verteilt ausgebildet sein und/oder in verschiedenen Abschnitten der Lichtaustrittsfläche des Innenteils verschiedene Reflexionsgrade besitzen, so dass in verschiedenen Abschnitten der Lichtaustrittsfläche des Innenteils verschiedene Ablenkungen der dort auftreffenden Lichtstrahlen erreicht werden können. Alternativ oder zusätzlich kann je nach Ausbildung des Außenteils eine solche Reflexionsschicht auch auf der Innenoberfläche des genannten Außenteils aufgebracht sein.

Alternativ oder zusätzlich kann die Außenoberfläche des Innenteils und/oder die Innenoberfläche des Außenteils auch mit anderen optisch wirksamen Mitteln, wie beispielsweise einer lichtbrechenden oder -streuenden Oberflächenstruktur, einer Facettierung oder Mattierung, oder auch einer färbenden oder abblendenden, folienartigen Beschichtung, versehen sein, wobei diese optischen Mittel je nach zu erzielendem Erscheinungsbild und Beleuchtungszweck ebenfalls eine über die Oberfläche inhomogene oder variierende Ausbildung besitzen können.

Das den Innenteil schalenförmig umschließende Außenteil kann grundsätzlich verschieden ausgebildet sein, beispielsweise nach Art einer Hohlkugel mit etwa gleich bleibender Wandstärke, die das genannte Innenteil umgibt. In vorteilhafter Weiterbildung der Erfindung jedoch ist das Außenteil als schalenförmiger Vollmaterialkorpus ausgebildet, dessen Wandstärke mehr oder minder stark variiert und/oder eine Innenoberfläche besitzt, deren Formgebung nicht nur von der Dimensionierung her, sondern auch von der Konturierung her von der Außenoberfläche des Vollmaterialkorpus abweicht, wobei die genannte Innenoberfläche vorteilhafterweise an die Außenoberfläche des Innenteils formangepasst ist. Vorteilhafterweise kann der genannte Vollmaterialkorpus des Außenteils mit seiner Innenoberfläche bündig und flächig auf der Außenoberfläche des Innenteils sitzen, insbesondere derart, dass aus dem Innenteil austretende und in den Außenteil eintretende Lichtstrahlen keine Brechung erfahren.

Der Innenteil des Optiksystems kann ebenfalls grundsätzlich verschieden ausgebildet sein, wobei der Innenteil vorteilhafterweise ebenfalls einen Vollmaterialkorpus bildet. Das Innenteil besitzt hierbei vorteilhafterweise eine domförmige Lichteintrittsfläche, mit der das Innenteil über der punktförmigen Lichtquelle sitzt und/oder die Lichtquelle zu einem Halbraum hin, in den das Licht der Lichtquelle austritt, abdeckt. Insbesondere kann das genannte Innenteil nach Art einer Linse ausgebildet sein, in die das von der zugeordneten Lichtquelle abgegebene Licht im Wesentlichen vollständig eintritt.

In einer Ausführungsform ist vorgesehen, dass das Innenteil als Lichtaustrittsfläche eine parabolische oder parabolähnliche Umfangsfläche und vorzugsweise eine flache oder gekrümmte Deckfläche an der der Lichtquelle abgewandten Seite der Umfangsfläche besitzt. Durch in der Beschreibung weiterer Ausführungsformen näher beschriebenen, variablen Beschaffenheiten dieser Deckfläche können verschiedene gewünschte optische Effekte bedingt werden.

Das Innenteil kann bevorzugt im Verhältnis zur Lichtquelle so angeordnet sein, dass sich die Lichtquelle im Bereich des Scheitels der Parabel befindet, und von dieser Position aus das Innenteil durchleuchtet. Das Innenteil ist bevorzugt ein Vollmaterialkorpus im Inneren des Außenteils. Die genannte Umfangsfläche kann in einer anderen Ausführungsform anstelle der genannten Parabelform aber auch eine Vielzahl anderer geometrischer Gestalten annehmen. Beispielsweise kann eine einfache Drehkegelform, eine elliptische Kegelform, eine hyperbolische Form, eine trichterartige Form, eine über den Umfang nur teilweise homogene oder inhomogene Form, beispielsweise einzelne Reflektorplatten, eine kugelartige- oder ellipsoide Form vorgesehen sein.

In einer besonders bevorzugten Ausführungsform ist das Innenteil als beidseitig geöffnetes Paraboloid oder ähnlich hierzu ausgebildet, wobei ungefähr im Scheitelbereich des Paraboloides die Lampe angeordnet ist. Das Paraboloid kann auf Höhe der etwa 1- bis etwa 5-fachen, bevorzugt der etwa 1,2- bis etwa 4-fachen, weiter bevorzugt der etwa 1,5- bis etwa 3-fachen und besonders bevorzugt der etwa 1,8-bis etwa 2,5-fachen linearen Exzentrizität vorzugsweise gerade, aber auch schräg abgeschnitten sein. Geeignete Paraboloide besitzen in einer Ausführungsform einen Stauchungs- bzw. Streckungskoeffizienten a von zwischen etwa 0,3 und etwa 5, bevorzugt von zwischen etwa 0,5 und etwa 3, und besonders bevorzugt von zwischen etwa 0,8 und etwa 1,5. Bevorzugte absolute Werte für die lineare Exzentrizität betragen etwa 0,3 cm bis etwa 5 cm, bevorzugt etwa 0,5 cm bis etwa 3 cm und besonders bevorzugt etwa 0,8 cm bis etwa 2 cm.

In der vorliegenden Erfindung wird als primäres Lichtbündel derjenige Anteil am von der Lichtquelle emittierten Gesamtlicht verstanden, welcher direkt, d.h. ohne reflektiert zu werden, durch die der Lichtquelle abgewandte Öffnung der Innenschale austritt, bzw. auf die Deckfläche der Innenschale auftrifft. Als sekundäres Lichtbündel wird derjenige Anteil am von der Lichtquelle emittieren Licht verstanden, welcher nach Reflektion an der Umfangsseite der Innenschale an das der Lichtquelle abgewandte Ende der Innenschale tritt.

In einer weiteren, bevorzugten Ausführungsform ist vorgesehen, dass die Umfangsfläche des Innenteils an dessen Außenseite zumindest teilweise reflektierend ausgebildet ist. Ist die Außenfläche reflektierend ausgebildet, so entsteht ein sekundäres Lichtbündel. Dadurch können sehr individuelle Ergebnisse hinsichtlich der Lichtausbreitung aus dem Innenteil, und damit auch der Gesamtleuchte erreicht werden. Durch eine vollständig oder teilweise reflektierende Ausbildung der Außenseite der Innenschale kann verhindert werden, dass Licht, welches nicht von der Lichtquelle stammt, in das Innenteil gelangt und die Lichtausbreitung beeinflussen könnte.

In einer Ausführungsform kann eine Bedampfung den Schalenoberflächen die reflektierenden Eigenschaften verleihen. Eine geeignete Bedampfung weisen unter anderem Metalle wie Al, Cu oder Ag, oder verschiedene Metalloxide, wie ZnO, SnO oder TiO₂ auf. Weiters sind Ausführungsformen vorsehbar, bei denen die Flächen unabhängig oder zusätzlich zur Bedampfung teilweise oder vollständig mit kleinen, flachen oder gekrümmten Teilen, insbesondere Plättchen ausgekleidet sind, um besondere Reflektionseffekte bzw. ein Wechselspiel zwischen Transparenz und Reflektion zu erzeugen.

Durch die geeignete Beschichtung können Oberflächen des erfindungsgemäßen Optiksystems auch absorbierende oder teilweise transparente Eigenschaften besitzen. Es ist in einer Ausführungsform angedacht, eine Oberfläche, beispielsweise einen Abschnitt der Lichtaustrittsfläche des Innenteils, so zu beschichten, dass der Reflexionsgrad nahezu oder genau 1 beträgt. Andere Beschichtungen erzeugen Reflexionsgrade von kleiner als etwa 0,2, andere zwischen etwa 0,2 und etwa 0,4, andere von zwischen etwa 0,4 und etwa 0,6, andere wiederum von zwischen etwa 0,6 und etwa 0,8, und andere von größer als etwa 0,8. Ein größerer Reflexionsgrad, beispielsweise 0,4 bis 1, kann an der Außenseite des Innenteils sinnvoll sein. Ein kleinerer Reflexionsgrad, beispielsweise 0 bis 0,6, kann an der Innenseite des Außenteils sinnvoll sein, wobei verschiedene Abschnitte der Innen- oder Außenteile mit verschiedenen Reflexionsgraden versehen sein können. Bei transparenten oder teilweise transparenten Materialien kann durch die Beschichtung auch der Transmissionsgrad beeinflusst werden. Bei den bevorzugt verwendeten, vollständig oder nahezu vollständig transparenten Materialien ergibt sich dieser bei Beschichtung aus der Formel 1 - Reflexionsgrad.

Absorbierende Eigenschaften sind an der Innenseite des Außenteils oder der Außenseite des Innenteils vor allem dann sinnvoll, wenn man die Ausbildung des sekundären Lichtbündels etwas schwächen will. Auf die bevorzugten Eigenschaften der anderen Oberflächen wird später in der Anmeldung eingegangen.

Geeignete Materialien für die Teile eines erfindungsgemäßen Optiksystems haben eine Brechzahl für die Wellenlänge der Natrium-D-Linie (589 nm) von zwischen etwa 1,4 und etwa 4, vorzugsweise zwischen etwa 1,5 und etwa 2,4 und besonders bevorzugt zwischen etwa 1,6 und etwa 2. Geeignete Grundmaterialien umfassen alle im Stand der Technik üblichen Gläser und Kunststoffe.

In einer bevorzugten Ausführungsform ist die Leuchte so ausgebildet, dass die Lichtquelle an oder innerhalb des Innenteils dermaßen angeordnet ist, dass das primäre Lichtbündel vorzugsweise kegelförmig oder ungefähr kegelförmig mit einem halben Öffnungswinkel von zwischen etwa 10° und etwa 60°, vorzugsweise zwischen etwa 15° und etwa 50° und besonders bevorzugt zwischen etwa 20° und etwa 45° aus der Vorderseite des Innenteils tritt. Als Vorderseite wird die der Leuchte abgewandte Abschnittskante der Umfangsfläche des Innenteils beziehungsweise die Deckfläche des Innenteils verstanden. Als halber Öffnungswinkel wird in diesem Zusammenhang derjenige Winkel verstanden, welcher sich zwischen der zentralen Achse und der Außenfläche des Lichtkegels befindet. Wenn die Innenschale gerade und kreisförmig im Querschnitt, beispielsweise regelmäßig parabolisch ist, so ist der primäre Lichtkegel kreiskegelförmig ausgebildet. Je nachdem, ob die Innenschale gerade oder schräg im Verhältnis zur Hauptachse der Leuchte steht und ob sie an der Vorderseite gerade oder schräg abgeschnitten ist, kann dieser Kegel eine exzentrische Ausbildung haben. Bei einer nicht kreissymmetrischen Ausbildung der Innenschale ist es auch denkbar, dass dieser Kegel beispielsweise die Form einer n-eckigen Pyramide, oder eines Kegels mit ellipsoider oder einer anderen, rund oder teilweise eckig geformten Grundfläche annimmt. In diesem Fall gelten die bevorzugten Werte für den halben Öffnungswinkel jeweils für diejenige Stelle des Kegels mit dem durchschnittlichen Abstand der Randflächen des Kegels von der zentralen Achse des Kegels, welche durch den Schwerpunkt der Grundfläche geht.

In einer Ausführungsform ist vorgesehen, dass die Deckfläche der Innenschale als Streulinse für das primäre Lichtbündel ausgebildet ist. Hier wird zumindest ein Teil, oder bevorzugt alle nicht in der Hauptachse liegenden Strahlen des primären Lichtbündels bei Durchlaufen der Deckfläche gebrochen, sodass sich der halbe Öffnungswinkel vergrößert. Diese Vergrößerung des Winkels kann für den am stärksten gebrochenen Strahl mindestens etwa 5%, bevorzugt mindestens etwa 10%, oder mehr als etwa 15% und/oder weniger als etwa 25% betragen. Die Streulinse kann regelmäßig sein, was bedeutet, dass die prozentuelle Ablenkung der Strahlen linear mit deren Auftreffwinkel wächst. In einer weiteren Ausführungsform kann die Deckfläche der Innenschale als Sammellinse ausgebildet sein. Die im Zusammenhang mit der Ausführungsform, in der die Deckfläche als Streulinse ausgebildet ist, definierten bevorzugten Ausgestaltungen und Effekte gelten hier gegengleich analog.

In einer anderen Ausführungsform ist die Deckfläche der Innenschale kugelmantelförmig gekrümmt, wobei die Krümmung bevorzugt der einer Kugel entspricht, deren Radius dem Abstand zwischen der Deckfläche und der Lichtquelle entspricht. Dies bewirkt, dass alle Strahlen des primären Lichtbündels genau oder annähernd normal auf die Deckfläche treffen, und damit unabhängig von dem Brechungsindex des verwendeten Materials nicht gebrochen werden. Der halbe Öffnungswinkel des primären Lichtkegels ändert sich beim Durchlauf der ersten Deckfläche nicht. Der lichttechnische Effekt für das primäre Strahlenbündel ist somit mit dem Fehlen einer Deckfläche zu vergleichen. In einer weiteren Ausführungsform kann die Deckfläche als gerade Platte ausgebildet sein. Diese hätte auf das primäre Lichtbündel typischerweise streuende Eigenschaften.

Für das sekundäre Strahlenbündel, dessen Strahlen in einem anderen Winkel auf die Deckfläche treffen als die des primären Strahlenbündels, ergeben sich durch die Ausbildung als Sammellinse, als gerade Fläche, als Streulinse oder als kugelmantelförmig gekrümmte Meniskuslinse andere Effekte.

In einer Ausführungsform mit einer parabolischen oder einem Paraboloid ähnlichen Innenschale entsteht für das sekundäre Strahlenbündel ein Sammelpunkt oder örtlich eingeschränkter Sammelbereich jenseits des Innenteils, worin ein Sekundärkegel des zweiten Strahlenbündels fußt. Dieser besitzt in einer bevorzugten Ausführungsform den gleichen Öffnungswinkel wie der Primärkegel. Der Sammelpunkt oder örtlich eingeschränkte Sammelbereich des sekundären Strahlenbündels kann durch die Deckfläche näher an die Lichtquelle heran- oder weiter von der Lichtquelle weggerückt werden.

Durch den unterschiedlichen Einfallswinkel an der Deckfläche ist es nicht notwendigerweise so, dass eine Deckfläche, die als Sammellinse, Streulinse oder einflussfrei für das primäre Strahlungsbündel ausgebildet ist, dieselben Effekte für alle Strahlen des sekundären Strahlenbündels aufzeigt. So kann es vorgesehen sein, dass eine Deckfläche vorgesehen ist, welche als Streulinse für das primäre Strahlenbündel und als Sammellinse auf zumindest einen Teil des sekundären Strahlenbündels wirkt. Somit würde der Öffnungswinkel des sekundären Konus erhöht und der Sammelpunkt oder räumlich begrenzte Sammelbereich des sekundären Lichtbündels näher an die Lichtquelle heranrücken, und gleichzeitig der Öffnungswinkel des primären Strahlenbündels erhöht.

Durch die individuelle Abstimmung der Winkel, der gegenseitigen Intensitäten (Reflexionsgrad), und der Lage der Sammelbereiche der primären und/oder sekundären Strahlungskonen ist es möglich, eine sehr individuelle Lichtausbreitung einzustellen. In einer Ausführungsform absorbiert die Beschichtung der Außenoberfläche des Innenteils Licht in einem bestimmten Wellenlängenbereich. Auf diese Art und Weise können für primäre und sekundäre Strahlung andere Farben und Lichtwärmen erzielt werden.

In einer weiteren Ausführungsform kann es vorgesehen sein, dass die Außenschale als Sammellinse für das primäre Lichtbündel ausgebildet ist. Dies kann beispielsweise bei Verwendung einer kugelförmigen Außenschale mit einem Brechungsindex n > 1 der Fall sein, durch die Stellung der Lichtquelle am gegenüberliegenden Rand der kugelförmigen Außenschale.

Es ist auch denkbar, dass die Außenhülle inhomogen ausgebildet ist und zusätzliche lichtbrechende Eigenschaften besitzt. In jeden Fall dient die Außenhülle als ein weiteres wichtiges Element der Optik, welches den Verlauf des Lichtes auch nach dem Austritt des primären und sekundären Lichtkegels aus dem Innenteil und damit das Erscheinungsbild und die Leuchteigenschaften der Leuchte beeinflusst.

In einer weiteren Ausführungsform der Erfindung ist die Umfangsfläche des Innenteils teilweise transparent ausgebildet. Dies kann durch Bedampfung oder anderweitige Beschichtung, sowie durch die Beschaffenheit des Material der Innenschale bedingt sein. Geeignete Bedampfungen und Materialien wurden schon im Zusammenhang mit vorangehenden Ausführungsformen besprochen. Hier entsteht ein dritter Anteil am emittierten Gesamtlicht, oder ein drittes Strahlenbündel, nämlich dasjenige, welches die Innenschale bei Durchgang durch die Umgebungshülle verlässt. Dieses dritte Strahlenbündel kann in seiner örtlichen Ausbreitung wesentlich weniger eingeschränkt sein als das erste und das zweite Strahlenbündel. Somit werden in dieser Ausführungsform auch Bereiche der Außenkugel angestrahlt, welche in den zuvor genannten Ausführungsformen nicht oder nur unwesentlich bestrahlt wurden. Es resultiert eine räumlichere Lichtverteilung, die weniger auf die primären und sekundären Konen beschränkt ist. Dies kann zur Folge haben, dass das Erscheinungsbild einer klassischen Glüh- oder Entladungslampe besser wiedergeben wird. Auch auf individuelle Elemente dieses dritten Strahlenbündels kann die Außenhülle je nach Ausbildung und Einfallswinkel der Strahlen brechend wirken. Dies gilt auch für die Seitenschale der Innenschale.

In einer weiteren, bevorzugten Ausführungsform ist die Innenfläche der Außenschale der Leuchte teilweise reflektierend ausgebildet. Dies hat zur Folge, dass Strahlen sowohl des ersten, des zweiten und des dritten Strahlenbündels reflektiert werden können, und somit die Lichtausbreitung innerhalb der Außenschale und nach außen radikal verändert werden kann. Diese Reflektion kann soweit getrieben werden, dass die gesamte Kugel gleichmäßig mit Licht erfüllt wird, oder aber das verschiedene Muster durch verschiedene Reflektionsflächen an der Innenseite der Kugel auftreten können. Für die Verleihung der reflektierenden Eigenschaften, bzw. der Verteilung und des Reflektionsmusters, gelten die Ausführungen im Zusammenhang mit zuvor beschriebenen Ausführungsformen.

In einer weiteren Ausführungsform kann die Außenschale zumindest teilweise facettiert ausgebildet sein. Die Facettierung kann sich an der Innen- und/oder an der Außenseite der Außenschale befinden. Sie kann dazu dienen, Lichtstrahlen vor dem Austritt aus der Außenschale abzulenken und einen möglichst räumlichen Eindruck des aus der Außenschale austretenden Lichtes zu erwecken, oder um dem austretenden Licht ein bestimmtes Muster zu verleihen.

Durch die verschiedenen Ausbildungsmöglichkeiten für die Innen- und Außenteile des Optiksystems erhält die Leuchte einen modularen, baukastenartigen Aufbau, der es erlaubt, mit einer begrenzten Anzahl von Variationen des Innenteils und/oder des Außenteils eine sehr viel größere Zahl von Variationen des Erscheinungsbilds der Leuchte zu erreichen. Vorteilhafterweise können mehrere, verschieden ausgebildete, insbesondere verschieden geformte Innenteile und/oder mehrere, verschieden ausgebildete, insbesondere verschieden geformte Außenteile vorgesehen und derart aufeinander abgestimmt sein, dass verschiedene Innenteile in ein Außenteil eingesetzt oder verschiedene Außenteile auf ein Innenteil gesetzt werden können. Je nach zu erzielendem Erscheinungsbild und Beleuchtungszweck kann wahlweise das eine oder das andere Innenteil verwendet und mit einem vorbestimmten Außenteil kombiniert oder umgekehrt das eine oder das andere Außenteil verwendet und mit einem jeweiligen Innenteil kombiniert werden.

Dies ermöglicht insbesondere das von der vorliegenden Erfindung des Weiteren vorgeschlagene Verfahren zur Herstellung einer erfindungsgemäßen Leuchte. In einer Ausführungsform wird dabei das Innenteil umgossen und auf diesem Wege das Außenteil hergestellt, um eine möglichst vollflächige Verbindung zwischen dem Innenteil und dem Außenteil zu erreichen. In einer anderen Ausführungsform wird ein zweischalig ausgebildetes Außenteil passgenau auf die Innenschale gesetzt.

Die reflektierenden Eigenschaften können den Schalenoberflächen auf verschiedene Arten verliehen werden. In einer bevorzugten Ausführungsform werden die Flächen bedampft. Als aufdampfbare Materialien eignen sich unter anderem solche Stoffe, die bereits im Zusammenhang mit der Bedampfung erläutert wurden. Als Aufdampfmethoden eignet sich u.a. Physical Vapor Deposition, darunter die dem Fachmann bekannten Prozesse Sputtering, Post-Laser Deposition, Cathodic Arc Deposition oder das Thermische Bedampfen.

Weitere Einzelheiten und Merkmale der vorliegenden Erfindung ergeben sich aus der nachfolgenden Figurenbeschreibung. Dabei zeigt:
- Fig. 1:: eine schematische Darstellung einer Leuchte nach einer vorteilhaften Ausführung der Erfindung;
- Fig. 2:: die Lichtquelle und die Innenschale einer Leuchte nach einer vorteilhaften Ausführung der Erfindung;
- Fig. 3:: die Lichtquelle, die Innenschale und einen Anschluss einer Leuchte nach einer vorteilhaften Ausführung der Erfindung;
- Fig. 4:: das Innenteil des Optiksystems der Leuchte aus Fig. 1 nach einer vorteilhaften Ausführung der Erfindung;
- Fig. 5:: den Vollmaterialkorpus des Außenteils des Optiksystems der Leuchte aus Fig. 1 nach einer vorteilhaften Ausführung der Erfindung;
- Fig. 6:: den Strahlungsverlauf einer Leuchte unter Ausblenden des Außenteils bzw. einer Leuchte ohne den Außenteil des Optiksystems nach einer vorteilhaften Ausführung der Erfindung;
- Fig. 7:: den Strahlungsverlauf einer Leuchte nach einer vorteilhaften Ausführung der Erfindung;
- Fig. 8a und 8b:: den Strahlungsverlauf für zwei verschiedene Ausführungsformen einer Leuchte unter Ausblenden des Außenteils nach einer vorteilhaften Ausführung der Erfindung bzw. einer Leuchte ohne den Außenteil des Optiksystems;
- Fig. 9a und 9b:: den Strahlungsverlauf für zwei verschiedene Ausführungsformen einer Leuchte nach einer vorteilhaften Ausführung der Erfindung;
- Fig. 10a und 10b:: den Strahlungsverlauf des dritten Strahlenbündels einer Leuchte nach einer vorteilhaften Ausführung der Erfindung; und
- Fig. 11a, 11b und 11c:: beispielhafte Anordnungen und Außenansichten von Leuchten nach vorteilhaften Ausführungen der Erfindung.

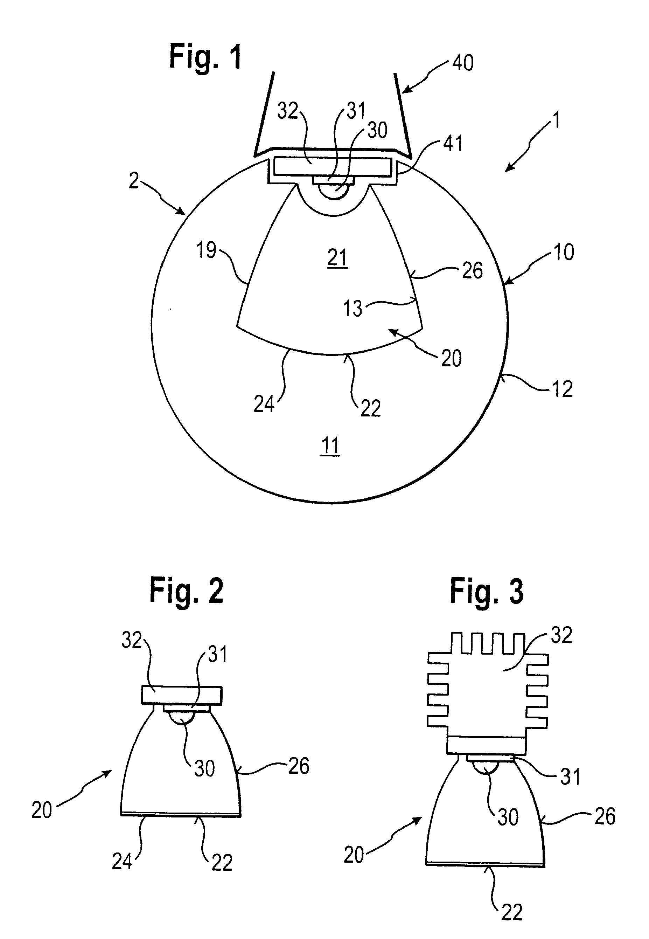

Figur 1 zeigt eine Ausführungsform einer Leuchte 1 nach einer vorteilhaften Ausführung der Erfindung. Sie weist einen Vollmaterialkorpus 2 auf, bestehend aus einer Außenhülle 10, einer Innenhülle 20. Des Weiteren sind eine Lichtquelle 30 und eine Halterung 40 zu erkennen. Der Raumbereich innerhalb der Innenschale 21 und der Raumbereich innerhalb der Außenschale 11 sind in der Zeichnung markiert. Die Außenschale 10 ist in dieser Ausführungsform kugelförmig und hat eine Außenseite 12 und eine Innenseite 13. Die Innenschale 20 besitzt eine parabolische Umfangsfläche 26. Ein weiterer Bestandteil des Innenteils 20 ist die Deckfläche 22. Die LED-Leuchte ist über einen Kontakt mit einem Sockel 32 verbunden. Die gesamte Leuchte ist auf einer Halterung 40 gehalten. Innenteil und Außenteil sind an der Stelle 41 bündig und fest miteinander verbunden. Das Innenteil 20, die Lichtquelle 30 und der Bereich (11, 21) in den die Lichtquelle emittiert, werden vollständig vom Außenteil 10 umschlossen.

Figur 2 zeigt eine vergrößerte Darstellung der Lichtquelle 30 zusammen mit dem Innenteil 20. Auch hier sind Lichtquelle 30, Verbindung 31 sowie Sockel 32 zu erkennen, sowie die Umfangsfläche 26 und die Deckfläche 22 des Innenteils 20. Figur 3 zeigt den Sockel 32 als leitenden Kontakt für die Leuchte 30.

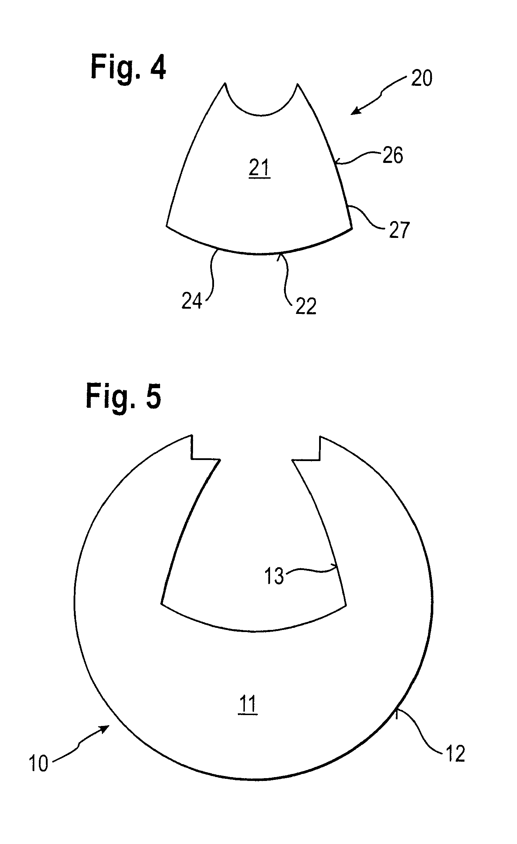

Figur 4 zeigt eine vergrößerte Darstellung des als Vollmaterialkorpus ausgebildeten Innenteils 20. Das Innenteil besitzt eine parabolische, an beiden Seiten abgeschnittene Umfangsfläche 26 und eine Deckfläche 22. Der vom Innenteil 20 umgebene Bereich ist der Bereich 21. Er wird durch die Innenseite 28 der Umfangsfläche und durch die Innenseite 25 der Deckfläche nach außen hin begrenzt. Außenseite 24 der Deckfläche und 27 der Umfangsfläche sind ebenfalls gezeigt.

Figur 5 zeigt einen Vollmaterialkorpus 2 des Außenteils 10. Innenteil 20 und Außenteil 10 sind an der in Fig. 5 gezeigten Innenoberfläche 13 fest miteinander verbunden. Der vom Außenteil eingeschlossene Bereich 11 wird durch die Innenseite 13 und die Außenoberfläche 12 des Außenteils begrenzt.

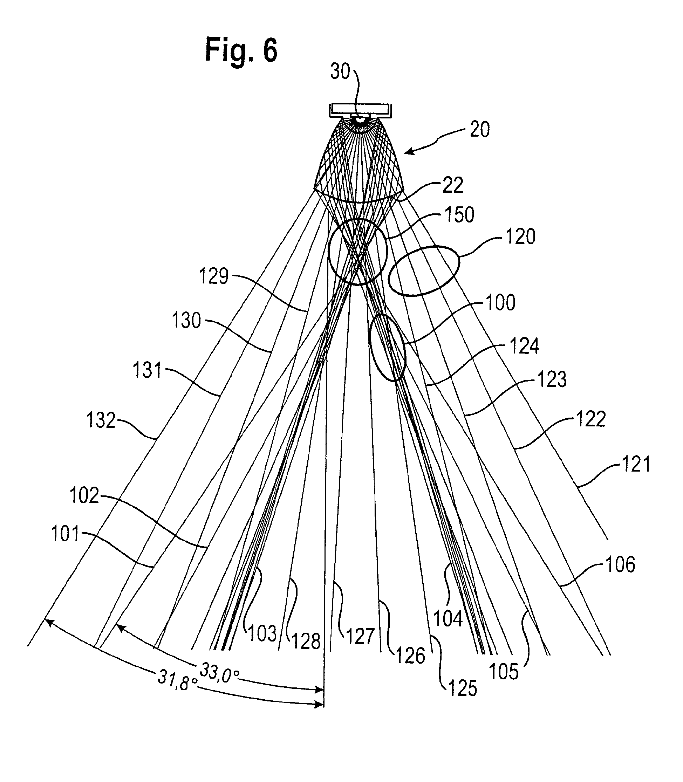

Figur 6 zeigt den Strahlungsverlauf einer Leuchte, wobei die Effekte des Außenteils und somit ein Merkmal außer Acht gelassen werden. Anhand des Strahlungsverlaufs lassen sich zwei Strahlenbündel unterscheiden:

Ein erstes Strahlenbündel 120, welches ohne von der Innenseite der Umfangsfläche des Innenteils reflektiert zu werden durch die Deckfläche 22 austritt. Die Strahlen des ersten Lichtbündels umfassen die Laufnummern 121 bis 132.

Weiters ist ein zweites Strahlenbündel 100 zu erkennen, welches sich aus all denjenigen Strahlen zusammensetzt, die an der Innenseite der Umfangsfläche des Innenteils 20 reflektiert wurden. Zu dieser Strahlengruppe zählen die Strahlen 101 bis 106. Das zweite Strahlenbündel besitzt außerhalb des Innenteils 20 einen örtlich eingeschränkten Sammelbereich (150).

Die Deckfläche 22 ist kugelmantelförmig gekrümmt, wobei die Krümmung einer Kugel entspricht, deren Radius dem Abstand zwischen der Deckfläche und der Lichtquelle entspricht.

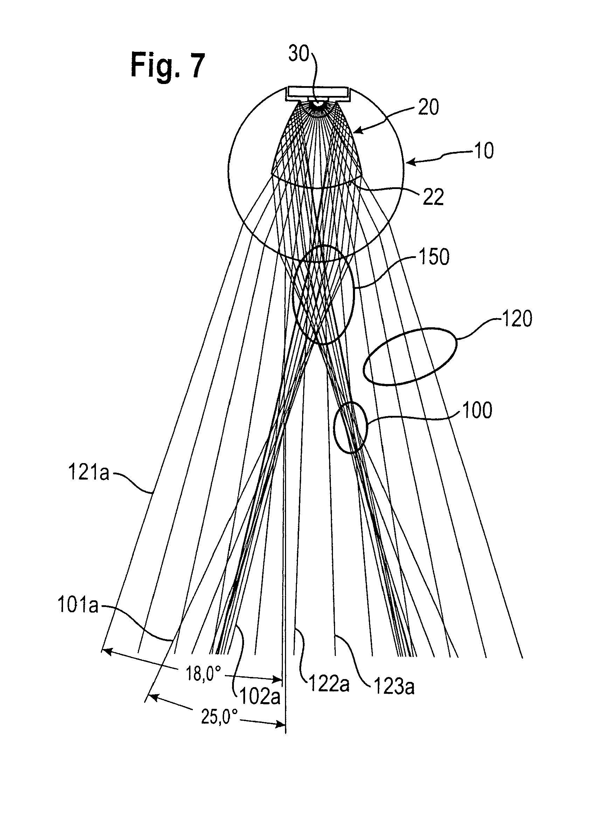

Figur 7 zeigt den Strahlungsverlauf einer Leuchte ähnlich der Leuchte aus Figur 6, welche außerdem eine hier kugelförmige Außenschale 10 aufweist, welche sowohl die Innenschale, als auch Lichtquelle und den Bereich, in den die Lichtquelle emittiert, vollständig umschließt. Es ist zu erkennen, dass der Sammelbereich 150 außerhalb der Außenschale 10 liegt. Das Außenteil wirkt sowohl für die Primärstrahlen 120 als auch für die Sekundärstrahlen 100 als Sammellinse. Der halbe Öffnungswinkel des sekundären Lichtbündels, β, beträgt 18° und der halbe Öffnungswinkel des primären Lichtbündels, α, beträgt 25°.

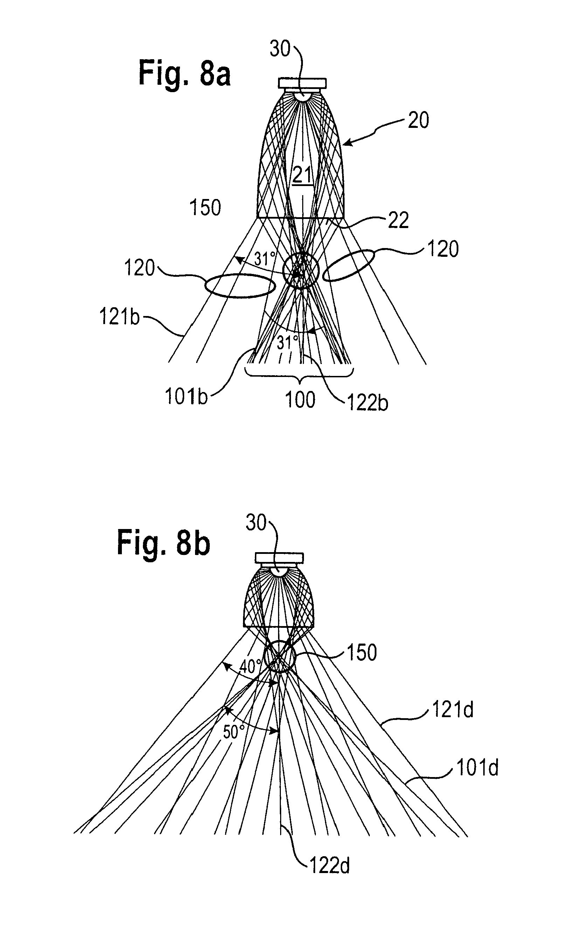

Figur 8a und Figur 8b zeigen zwei weitere Ausführungsbeispiele einer Leuchte ohne Außenteil. In Figur 8a ist das Innenteil als längliches Paraboloid ausgebildet. In Figur 8b zeigt eine kurze und gestauchtere Ausbildung des Paraboloids. In beiden Fällen wird das primäre Strahlenbündel durch die als Streulinse ausgebildete Deckfläche 22 des Innenteils 20 gebrochen.

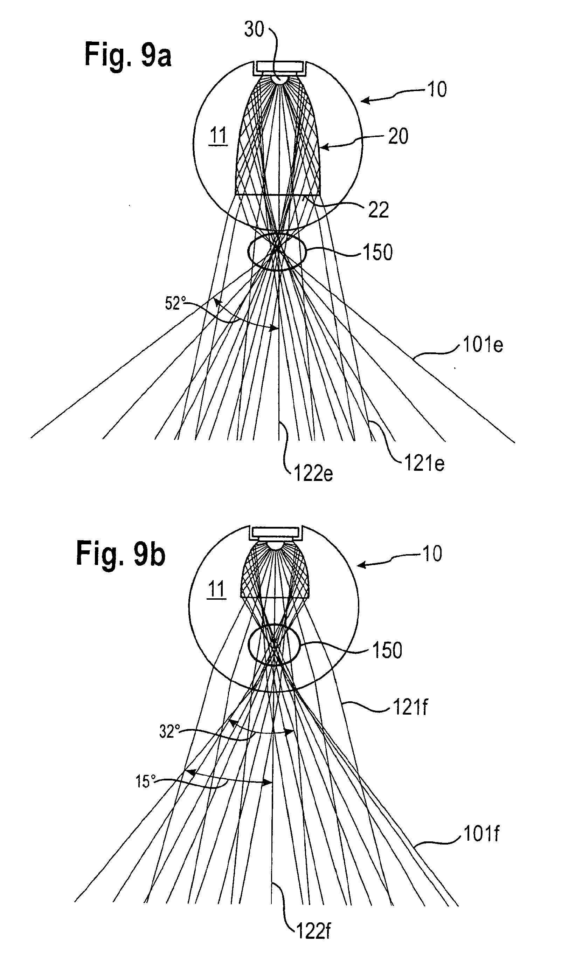

Figuren 9a und 9b zeigen Leuchten ähnlich der aus Figuren 8a und 8b, jedoch mit einer kugelförmigen Außenschale 10.

Die Sammelzone 150 liegt in Figur 9a außerhalb der Außenschale 10. In Figur 9b liegt die Sammelzone 150 hingegen innerhalb des Außenteils 10.

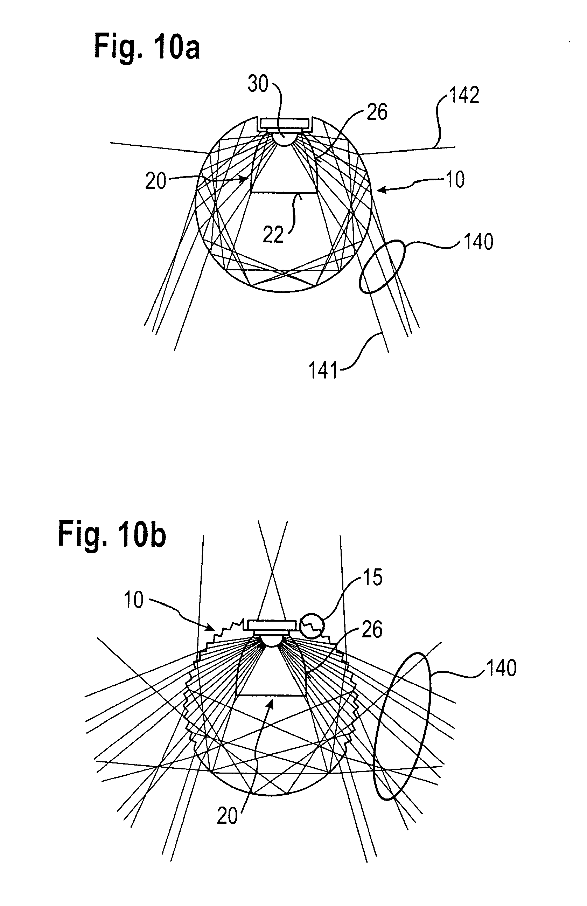

Figur 10a zeigt eine Leuchte, wobei die Außenhülle 10 an ihrer Außenumfangsfläche teilweise reflektierend ausgebildet ist. Außerdem ist die Umfangsfläche 26 des Innenteils teilweise transparent ausgebildet. Alle in Figur 10a gezeichneten Strahlen 140 gehören zu einem dritten Strahlenbündel, welches weder direkt aus der Deckfläche 22 des Innenteils 20 austritt, noch an der Innenseite 28 der Umfangsfläche 26 des Innenteils 20 reflektiert wird. Es kann erkannt werden, dass die Strahlung 140 sich gleichmäßig über die Außenschale 10 ausbreitet und eine flächendeckende Aufhellung dieser Außenhülle 10 ermöglicht.

In Figur 10b ist ebenfalls das dritte Strahlenbündel erkennbar. Hier ist die Außenschale 10 an ihrer Außenoberfläche facettiert ausgebildet, was sich im Ausschnitt 15 erkennen lässt. Dadurch werden die Tertiärstrahlen 140 in einer diffusen Art und Weise von der Leuchte im Raum verteilt.

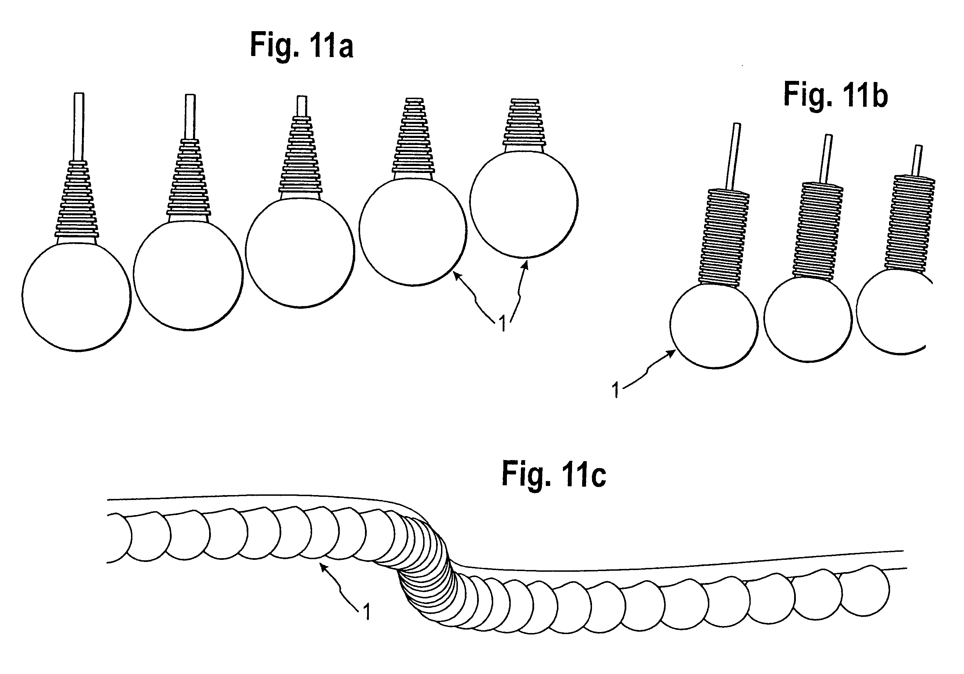

Figuren 11a, 11b und 11c zeigen Außenansichten von Leuchten 1 und Anordnungen derselben. Es ist zu erkennen, dass eine Leuchte 1 von außen sehr gut eine klassische runde Glühbirne widerspiegeln kann. Auch andere als kugelförmige Gestalten sind denkbar. Werden diese Leuchten eingeschalten, kann je nach Ausführungsform eine andere innere Struktur zum Vorschein treten.

## Patentansprüche

1. Leuchte, vorzugsweise Wand- und/oder Deckenleuchte, mit zumindest einer vorzugsweise punktförmigen Lichtquelle (30), vorzugsweise in Form einer LED, einer der Lichtquelle (30) unmittelbar zugeordneten Auskoppellinse (33) und zumindest einem der Auskoppellinse (33) nachgeordneten Optiksystem zur Steuerung der Lichtausbreitung,
**dadurch gekennzeichnet, dass**
das Optiksystem mehrere ineinander angeordnete, jeweils zumindest teilweise transparente und von der Lichtquelle (30) nacheinander durchstrahlbare Korpusteile aufweist, die zumindest ein Innenteil (20) und zumindest ein Außenteil (10) umfassen, wobei das Innenteil (20) einen linsenförmigen Vollmaterialkorpus bildet, der mit einer napfförmigen Lichteintrittsfläche (23) die Lichtquelle (30) halbraumartig umschließt, und eine Lichtaustrittsfläche mit einer Umfangsfläche (26) und einer sich daran anschließenden Deckfläche (22) an der der Lichtquelle (30) abgewandten Stirnseite aufweist, und wobei das Außenteil (10) sowohl das Innenteil (20) als auch die Lichtquelle (30) und den Bereich, in den die Lichtquelle (30) emittiert, umschließt, wobei das Außenteil (10) mit seiner Innenfläche flächig auf der Lichtaustrittsfläche (23) des Innenteils (20) einschließlich deren Umfangsfläche (26) und Deckfläche (22) sitzt derart, dass durch das Innenteil (20) hindurchtretendes Licht im Wesentlichen brechungsfrei in den Außenteil (10) eintritt.

2. Leuchte nach Anspruch 1, wobei die Umfangsfläche (26) des Innenteils (20) sich im Durchmesser von der Lichtquelle (30) weg erweitert und das Außenteil (10) eine hinterschnittene Innenfläche (13) besitzt, die vollflächig mit der Umfangsfläche (26) des Innenteils (20) in Berührung steht.

3. Leuchte nach einem der vorhergehenden Ansprüche, wobei das Außenteil (10) einen schalenförmigen Vollmaterialkorpus (11) bildet, dessen Innenoberfläche (13) abweichend von dessen Außenoberfläche (12) geformt und an die Außenoberfläche (27) des Innenteils (20) formangepasst ist, wobei das Außenteil (10) insbesondere eine etwa kugel- oder birnenförmige Außenoberfläche (12) besitzt.

4. Leuchte nach einem der vorangehenden Ansprüche, wobei zwischen dem Innenteil (20) und dem Außenteil (10) zumindest eine vorzugsweise teildurchlässige Reflexionsschicht (19) vorgesehen ist, die auf die Außenoberfläche (27) des Innenteils (20) und/oder die Innenoberfläche (13) des Außenteils (10) aufgebracht ist, wobei insbesondere zumindest die Umfangsfläche (26) des Innenteils (20) zumindest teilweise reflektierend ausgebildet ist.

5. Leuchte nach einem der vorangehenden Ansprüche, wobei die Lichtquelle (30) an oder innerhalb des Innenteils (20) dermaßen angeordnet ist, dass ein primäres Lichtbündel (120), welches alle Strahlen umfasst, die nicht auf die Umfangsfläche (26) des Innenteils treffen, etwa kegelförmig mit einem halben Öffnungswinkel (β) von zwischen 10° und 60°, vorzugsweise zwischen 15° und 50°, und besonders bevorzugt zwischen 25° und 45° aus der Deckfläche (22) des Innenteils (20) austritt, wobei die Deckfläche (22) des Innenteils (20) als Streulinse für das primäre Lichtbündel (120) ausgebildet ist.

6. Leuchte nach einem der vorhergehenden Ansprüche, wobei die Deckfläche (22) des Innenteils (20) kugelmantelförmig gekrümmt ist und die Krümmung bevorzugt der einer Kugel entspricht, deren Radius dem Abstand zwischen der Deckfläche und der Lichtquelle (30) entspricht.

7. Leuchte nach einem der vorangehenden Ansprüche, wobei das Außenteil (10) als Sammellinse für das primäre, unreflektiert aus dem Innenteil (20) austretende Lichtbündel (120) ausgebildet ist und ein sekundäres Strahlenbündel (100), welches alle Strahlen umfasst, die an der Reflexionsschicht (19) auf der Umgebungsfläche (26) des Innenteils (20) reflektiert werden, einen Sammelpunkt oder örtlich eingeschränkten Sammelbereich (150) innerhalb des Außenteils (10) besitzt.

8. Leuchte nach einem der Ansprüche 1 bis 6, wobei ein sekundäres Strahlenbündel (100), welches alle Strahlen umfasst, die an der Reflexionsschicht (19) auf der Umgebungsfläche (26) des Innenteils (20) reflektiert werden, einen Sammelpunkt oder örtlich eingeschränkten Sammelbereich (150) außerhalb des Außenteils (10) besitzt.

9. Leuchte nach einem der vorangehenden Ansprüche, wobei das Außenteil (10) an seiner Außenoberfläche (12) teilweise reflektierend und/oder zumindest teilweise facettiert ausgebildet ist.

10. Leuchte nach einem der vorhergehenden Ansprüche, wobei mehrere Lichtquellen (30) vorgesehen sind, denen jeweils ein separates Innenteil (20) zugeordnet ist, die von einem gemeinsamen Außenteil (10) umschlossen sind.

11. Leuchte nach dem vorhergehenden Anspruch, wobei das gemeinsame Außenteil (10) einen Träger oder Halter für die mehreren Lichtquellen (30) und/oder die mehreren Innenteile (20) bildet, wobei vorzugsweise die mehreren Innenteile (20) in das gemeinsame Außenteil (10) eingegossen sind.

12. Leuchte nach einem der beiden vorhergehenden Ansprüche, wobei sie als Leuchtenband und/oder -paneel ausgebildet ist und das gemeinsame Außenteil (10) ein vorzugsweise flexibles Band und/oder Trägerpaneel bildet, in das nach Art einer Lichterkette die mehreren Innenteile (20) eingesetzt sind.

13. Leuchte nach einem der vorhergehenden Ansprüche, wobei mehrere, voneinander verschieden ausgebildete, insbesondere verschieden geformte Innenteile (20) und/oder mehrere, voneinander verschieden ausgebildete, insbesondere verschieden geformte Außenteile (10) vorgesehen und derart aufeinander abgestimmt sind, dass verschiedene Außenteile (10) auf ein Innenteil (20) setzbar und/oder verschiedene Innenteile (20) in ein Außenteil (10) einsetzbar sind.

14. Verfahren zur Herstellung einer Leuchte nach einem der vorangehenden Ansprüche, wobei das Innenteil (20) umgossen wird, um ein umschließendes Außenteil (10) auszubilden.

15. Verfahren nach dem vorhergehenden Anspruch, wobei das Innenteil (20) vor dem Umgießen auf seiner Außenoberfläche (27) zumindest teilweise mit einer vorzugsweise teildurchlässigen Reflexionsschicht (19) versehen, vorzugsweise bedampft wird, wobei die Reflexionsschicht (19) über die Außenoberfläche (27) des Innenteils (20) verteilt vorzugsweise inhomogen und/oder im Reflexionsgrad variierend ausgebildet wird, wobei insbesondere der Transparenzgrad und/oder der Reflexionsgrad der Schalenflächen und gegebenenfalls die Brechzahl der Oberflächen des Innen- (20) und/oder Außenteils (10) durch Bedampfen eingestellt wird.
